# EUROPEAN PATENT APPLICATION

(11) **EP 3 767 564 A1**
(43) Date of publication of application: **20.01.2021**
(21) Application number: 20157181.7
(22) Date of filing: 13.02.2020
(51) Int. Cl.: G06Q 10/06, G06F 9/451

(54) **DISPLAYING METHOD, DEVICE AND STORAGE MEDIUM FOR SERVICE CARD**

(30) Priority: 19.07.2019 CN 201910656061
(71) Applicant: Beijing Xiaomi Mobile Software Co., Ltd., Beijing 100085 (CN)
(72) Inventor: XIA, Yuhang, Beijing, Beijing 100085 (CN); LIU, Yue, Beijing, Beijing 100085 (CN); TAO, Jie, Beijing, Beijing 100085 (CN)
(74) Representative: dompatent von Kreisler Selting Werner - Partnerschaft von Patent- und Rechtsanwälten mbB

(57) **Abstract**

The present disclosure relates to a method, device and storage medium for displaying service cards. The method for displaying service cards includes: acquiring (S101) one or more service cards, each of which is used to realize one or more functions; and displaying (SI02) the one or more service cards, or reorganizing and then displaying at least two of said service cards, according to presentation requirements. The services of the service cards of the quick applications, the third-party applications and the system applications are acquired, the related service cards in the corresponding scenes are displayed, and a variety of services under the scene can be packaged into a collection of services to be provided to the user, which constantly improves and optimizes the functions and improves the use experience.

## Description

### TECHNICAL FIELD

The present disclosure relates to mobile phone application field, and more particularly, to a displaying method, device and storage medium for a service card.

### BACKGROUND

In related art, when a user installs multiple fast application software and third-party applications, information among the various software is still independent of each other, and the user needs to view required services in the multiple quick applications.

### SUMMARY

In order to overcome the problems in the related art, the present disclosure provides a method, a device and a medium for displaying service cards.

According to a first aspect of embodiments of the present disclosure, there is provided a method for displaying service cards, including:

acquiring one or more service cards, each of which is used to realize one or more functions;

displaying the one or more service cards, or reorganizing and then displaying at least two of said service cards according to presentation requirements.

The service cards may include: the service card including different services generated by disassembling different services of an application; or the service card corresponding to a function user interface of the application generated after detecting that a user drags the function user interface.

The presentation requirements may include:
a presentation requirement generated according to to-do items set by a user and/or a current scene; or
a presentation requirement generated according to user information and/or the current scene, wherein the scene includes: a time scene, a location scene, or a time and location scene.

The displaying the one or more service cards, or reorganizing and then displaying at least two of said service cards, according to presentation requirements may include:
when the presentation requirement includes the service card for a single event, displaying one service card for reminding of one to-do item; or,
when the presentation requirement includes the service cards for a plurality of items, displaying a plurality of the service cards for reminding of a plurality of to-do items; or
when the presentation requirement includes the service cards for at least two related items, reorganizing and then displaying the at least two service cards for reminding of the at least two related to-do items.

The reorganizing and then displaying at least two of said service cards may include: prioritizing the at least two of the service cards and displaying them in a priority order.

The method may further include:
receiving user instructions, adding/deleting the service cards, or adjusting an order of the service cards.

The method further includes:
receiving a notification of service content update sent by a service party and acquiring the service card related to the service content again.

According to a second aspect of embodiments of the present disclosure, there is provided a device for displaying service cards, including:
an acquisition module, configured to acquire one or more service cards, each of which is used to realize one or more functions;
a display module, configured to display the one or more service cards or reorganize and then display at least two of the service cards according to presentation requirements.

The service cards may include: the service card including different services generated by disassembling different services of an application; or the service card corresponding to a function user interface of the application generated after detecting that a user drags the function interface.

The presentation requirements may include:
a presentation requirement generated according to to-do items set by a user and/or a current scene; or
a presentation requirement generated according to user information and/or the current scene, wherein the scene includes: a time scene, a location scene, or a time and location scene.

The display module may include: when the presentation requirement includes the service card for a single event, displaying one service card for reminding of one to-do item; or,
when the presentation requirement includes the service cards for a plurality of items, displaying a plurality of the service cards for reminding of a plurality of to-do items; or
when the presentation requirement includes the service cards for at least two related items, reorganizing and then displaying the at least two service cards for reminding of the at least two related to-do items.

The reorganizing and then displaying at least two of said service cards may include: prioritizing the at least two of the service cards and displaying them in a priority order.

The device may further include:
an instruction receiving module, configured to receive user instructions, add/delete service cards, or adjust the order of the service cards.

The device may further include:
a notification receiving module, configured to receive a notification of service content update sent by a service party and acquire the service card related to the service content again.

According to a third aspect of embodiments of the present disclosure, there is provided a device for displaying service cards, including:
a processor;
a memory for storing instructions executable by the processor;
wherein the processor is configured to:
acquire one or more service cards, each of which is used to realize one or more functions;
display the one or more service cards or reorganize and then display at least two of the service cards according to presentation requirements.

According to a fourth aspect of embodiments of the present disclosure, there is provided a non-transitory computer-readable storage medium having stored therein instructions that, when executed by a processor of a mobile terminal, causes the mobile terminal to perform a method for displaying service cards, the method including:
acquiring one or more service cards, each of which is used to realize one or more functions;
displaying the one or more service cards, or reorganizing and then displaying at least two of said service cards, according to presentation requirements.

The technical solutions provided by the embodiments of the present disclosure can include the following beneficial effects: acquiring the services of the service cards of the quick applications, the third-party applications and the system applications, and displaying the related service cards in the corresponding scenes. Besides, a variety of services under the scene may also be packaged to a collection of services to be provided to the user, which constantly improves and optimizes the functions and improves the use experience.

It is to be understood that both the foregoing general description and the following detailed description are exemplary and explanatory only and are not restrictive of the present disclosure, as claimed.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a flow chart showing a method for displaying a service card, according to an exemplary embodiment.
Fig. 2 is a view illustrating an exemplary embodiment.
Fig. 3 is a view illustrating an exemplary embodiment.
Fig. 4 is a block diagram illustrating a device for displaying a service card, according to an exemplary embodiment.
Fig. 5 is block diagram illustrating a device for displaying a service card, according to an exemplary embodiment.
Fig. 6 is block diagram illustrating a device for displaying a service card, according to an exemplary embodiment.
Fig. 7 is block diagram illustrating a device for displaying a service card, according to an exemplary embodiment.

### DETAILED DESCRIPTION

Reference will now be made in detail to exemplary embodiments, examples of which are illustrated in the accompanying drawings. When the accompanying drawings are described in the following, the same numbers in different drawings represent the same or similar elements unless otherwise represented. The implementations described in the following exemplary embodiments do not represent all implementations consistent with the present disclosure. Instead, they are merely examples of devices and methods consistent with aspects related to the present disclosure as recited in the appended claims.

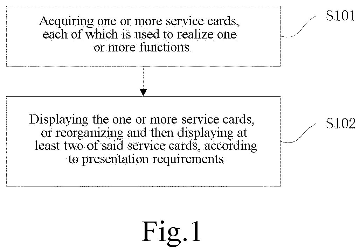

Fig. 1 is the flow chart of a method for displaying a service card, according to an exemplary embodiment. As shown in FIG. 1, the method for displaying the service card includes the following steps.

In step 101, one or more service cards is acquired, and each of the service cards is used to realize one or more functions.

In step S102, the one or more service cards is displayed, or at least two of said service cards are reorganized and then displayed, according to presentation requirements.

In the embodiment, in step S101, the service cards can be one or more service cards which are made by a service provider disassembling a certain core service of its own application. For example, a Ctrip quick application disassembles a flight ticket order of a user to make a service card for displaying flight ticket information. The service card can include a part of the service of the hosted application and a shortcut portal to start the service. Through the service card, users can quickly obtain main information provided by the service, and can also quickly start the required service through the shortcut portal on the service card. The service provider herein refers to a service party for providing the application, especially a service party for providing fast applications. The service card can also be a service card generated after the terminal detects that the user drags a function interface of the application. When using the application, if the user is interested in a function of a certain interface of the application, he/she can drag the function interface. After the system detects the dragging behavior of the user, the service card of the function is generated. For example, when a user is browsing a third-party weather APP and thinks that the weather in the coming few days is very useful for him/her, the user can drag on the interface which displays the weather in few days, so as to generate a service card that displays the weather in the coming few days, and display it on a specified screen, for example, a leftmost screen, which is convenient for the user to view at any time without entering the weather APP every time. Therein dragging can occur in any direction along a certain path or to a specific position on the display, for example.

In step 102, the presentation requirements include:
a presentation requirement generated according to to-do items set by the user and/or a current scene, wherein the scene includes: a time scene, a location scene, or a time and location scene. The current scene may refer to a current time scene, such as the day before departure or the day of departure; or refer to the location scene, such as a place of departure or destination; or refer to the time and location scene, such as a location of the day before departure or 8 hours after the arriving at the destination or the like.

According to the to-do items of the user, service cards related to the to-do items can be obtained. At the same time, due to different scenes in which the user is, the service cards required will be also different. For example, the user sets a to-do item to prepare breakfast and read books before 10:00 a.m., and to go shopping in the supermarket at 11:00 a.m. on weekends. Then, the service card for preparing breakfast and reading books can be displayed before 10:00 a.m. to remind the user, and, the service card for shopping in the supermarket instead of the above service card can be displayed after 11:00 a.m.

Alternatively, the presentation requirements include: a presentation requirement generated according to user information and/or the current scene, wherein the user information may be travel information of the user or the travel information generated according to ticket purchase information of the user. For example, if a user purchases a flight ticket from Beijing to New York through the Ctrip quick application, the system will obtain a plurality of service cards according to the flight ticket information, such as a local navigation service card, a boarding service card, an exchange rate service card, a weather service card, a hotel information service card, a destination navigation service card, or the like. According to the scene of the user, there will be different presentation requirements. The presentation requirements before departure mainly includes presentation of a local navigation service card, a boarding service card and an exchange rate service card, and the presentation requirement after arriving at the destination mainly includes presentation of a hotel information service card, a destination navigation service card, a weather service card, or the like.

When the scene changes, the presentation requirements may also change, and it is necessary to acquire the relevant service cards again and update contents of the service cards. Since different information is needed when the user is in different scenes, when it is detected that the scene where the user is located has changed, the service card related to the current scene is acquired again, and the content of the service card is updated. With the change of the scenes, the service cards can be obtained at any time. In some scenes, only one service card may be required to be obtained. In some other scenes, a plurality of service cards for the same application or the service cards for a plurality of different applications may be required to be obtained. The corresponding service provider is requested to update the content of the service cards while the service cards are acquired, to ensure that the service carried by the service cards in different scenes is timely and valuable contents.

The displaying the one or more service cards, or reorganizing at least two of said service cards and then displaying, according to presentation requirements includes following cases.

When the presentation requirement includes the service card for a single item, one of the service cards is displayed for reminding of one to-do item. For example, the current time is the morning on the working days, there is no to-do item set by the user, and there is no travel information, then the presentation requirement is only related to normal working of the user, and the traffic conditions and driving time from the user's residence to the company can be displayed.

Alternatively, when the presentation requirement includes the service cards for a plurality of items, a plurality of the service cards are displayed for reminding of a plurality of to-do items. For example, the user sets two to-do items on the rest day, i.e. buying toothpaste and going to the bank to withdraw money, both of which need to be completed on the rest day, but they do not have relevance. Then, the system displays two service cards for reminding.

Alternatively, when the presentation requirement includes service cards for at least two related items, the at least two service cards are reorganized are then displayed for reminding of the at least two related to-do items. For example, travel information of the user obtained by the system is: flying to New York on May 20. The travel information can be divided into a plurality of related to-do items, such as: taking a taxi to the airport, boarding, claiming baggage, taking a taxi to the hotel, or the like. Thus, when the scene is before boarding, the presentation requirement includes two related items of taking a taxi to the airport and boarding, and the service cards for the two related items can be reorganized and then displayed.

The reorganizing and then displaying at least two of said service cards includes: prioritizing the at least two of the service cards and displaying them in a priority order.

Still taking the case before the user boarding the flight mentioned above as an example, the user's location is, for example, at home, and in the service cards for the two items of taking a taxi to the airport and boarding, it is clear that the most needed information for the user is how to arrive at the airport, and thus the navigation service from home to the airport is the most important to the user, and the navigation service card is placed at the top position.

The method for displaying the service card further includes:

receiving user instructions, adding/deleting the service cards, or adjusting the order of the service cards.

In the above displaying method, the content is displayed according to the user's settings or the user information, based on the current scene, and according to a preset display rule. Therefore, under a certain display demand, the number and order of displayed service cards are fixed, and the user may not be satisfied with the display result, or the user temporarily adjusts the set to-do items or the trip, which makes the displayed content deviates from the user's requirements, then the user can add/delete the displayed service cards, or adjust the display order of the service cards.

The method in the embodiment further includes: receiving a notification of service content update sent by the service party and acquiring the service card related to the service content again. When the service party adjusts and upgrades its service content, the user is notified to perform updating, and the intelligent terminal will download the function card related to the service again. In this way, the service party can quickly upgrade the content of the service card, improve the efficiency of information iteration, and thereby improving the service quality. At the same time, the user can quickly acquire the services provided by the service party, which improves the user's experience.

In order to understand the method in the present disclosure, now a description is given with reference to examples.

### Example 1

Mr. Li is a programmer and is very busy at work usually. He goes home late every day, and can't go to the supermarket to buy goods at any time. Generally, Mr. Li has time to go to the supermarket only on weekends and purchases the goods he needs for next week. In the past, Mr. Li made a purchase list and set an alarm clock to remind him. Sometimes, however, when the alarm clock rings, Mr. Li is busy programming, and can't go to the supermarket at the first time, and when he finishes his work, he forgot to go to the supermarket. If a plurality of alarm clocks is set, it will disturb his life. Later, Mr. Li changes his mobile phone. He can set up a to-do list to go shopping in the supermarket on Saturday. Then the shopping reminder will be displayed on his mobile phone at any time. As long as he picks up his mobile phone, he can see the shopping reminder, and there is no alarm clock to disturb him, which makes Mr. Li very satisfied.

### Example 2

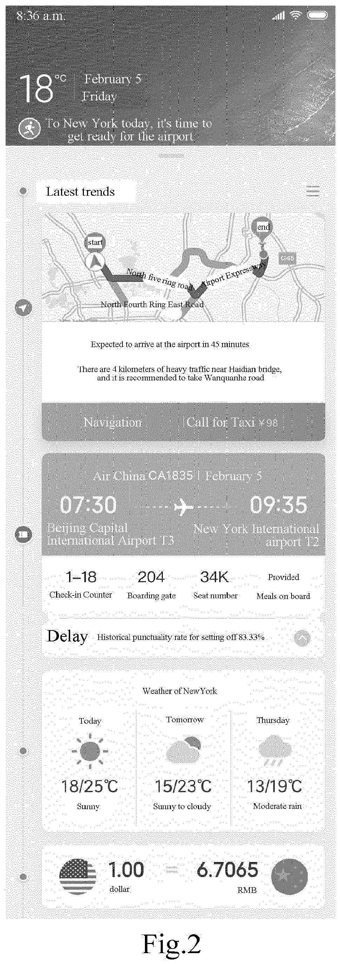

As shown in Fig. 2, the user booked a flight from Beijing Capital International Airport to New York International Airport on February 5 through the Ctrip APP.

Based on the above information, the system will acquire a plurality of service cards, including: information of Ctrip APP extracted by the system, the generated flight service card, and the hotel service card.

A navigation service card is a service card generated by the service party splitting main functions of the Didi Taxi quick application, including navigation map, route reminder, call service, or the like.

At the same time, the system may also extract the weather information in the weather APP and generate the weather service card. According to the travel destination of the user, the exchange rate information of the destination, America, is extracted to form the exchange rate service card. The system clock information is extracted and the time difference service card is generated.

Before departure, the system may generate the presentation requirements according to the current scene, and acquire relevant service cards. For users, the first task is to arrive at the airport on time. Therefore, the navigation service card provided by the Didi Taxi is loaded first, and on the top of the card, the navigation map is displayed to prompt the user a route from the current location to the airport and the user can adjust the route. In addition, the traffic condition is displayed under the navigation map, the user is prompted of the predicted arrival time, and is prompted to arrange the departure time reasonably according to the traffic condition, and a reasonable route is recommended. At the lower part of the service card, there will be a navigation button and a call button, and beside the call button, there will also be the cost for taking the Didi Taxi. By clicking the navigation button, a whole navigation map is directly invoked and it switched to a navigation interface. By clicking the call button, it comes to the Didi Taxi interface, and the user can directly take the taxi to the airport, and the dynamic information of how long the driver will come to pick up the user may be acquired at the same time.

Then the flight service card of the Ctrip APP is loaded, and relevant information related to the information in the ticket is collected, such as collecting information of a parking space of the taxi and a subway exit according to the flight terminal, or information of whether the arrival time of the flight is on time, how long a delay lasts if there is a delay, etc., and these information are integrated in the service card related to the flight ticket.

According to the destination New York of the user, the weather service card and the latest weather information of New York are loaded. The user is reminded to be prepared in advance on whether he/she needs to prepare rain gear, etc.

To travel abroad, the user also needs to change a certain amount of U.S. dollars in advance, to facilitate living and shopping of the user at the destination. The exchange rate service card is loaded and the user is prompted of the exchange rate between U.S. dollars and RMB to facilitate the user calculating the cost.

The navigation service card for the Didi Taxi quick application, the flight service card for the Ctrip APP, the weather service card, the exchange rate service card, etc. are prioritized according to a degree of most concern by the user under the user's scene, and reorganized into a set of service cards as shown in Fig. 2, and the relevant services and information will be clearly displayed to the user, such as on the leftmost screen. The user only needs to open the leftmost screen to view the related information, without having to query in the related quick applications and APPs, which saves time and improves the user's experience.

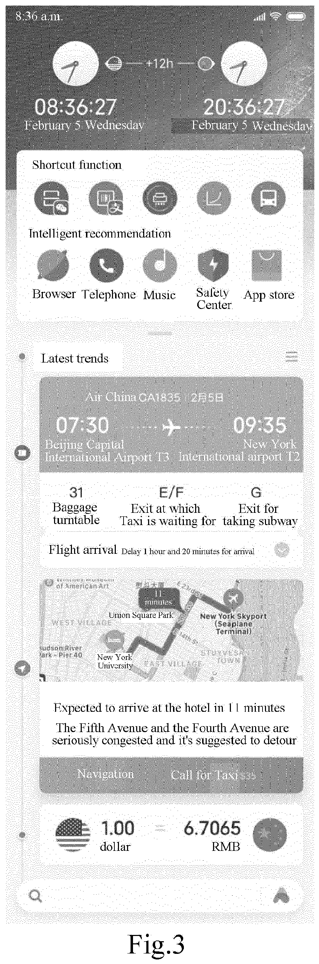

As shown in Fig. 3, when the user arrives at the destination, New York, the service card is reloaded and the time difference between New York and Beijing is displayed at the top of the screen. Since the most concerned things after the user arrives at the destination are the baggage carousel, the exit at which the taxi is waiting for, the exit for taking subway, and so on, the system will adjust locations of the service cards and place the flight service card at the top. The content of the navigation service card is also updated as the local information in time, such as the route from the airport to the hotel as well as the estimated arrival time shown in the navigation map, and the traffic conditions, such as road congestion in the route, are prompted, so as prompt the user to bypass the congestion.

If an emergency, such as a terrorist attack, occurs during the course of the user going to the hotel according to the navigation prompt, resulting in the closure of the road to the hotel, the service provider of Didi taxi quick application can update the navigation service card at the first time and notify the client-side of updated content. The client-side can retrieve the navigation service card again and avoid the closed road section.

Through the above embodiments, it can be seen that the method for displaying the service card provided in the present disclosure acquires services of service cards of the quick applications, third-party applications and system applications, and displays related service cards in the corresponding scenes, and can also package a variety of services under the scene to be a collection of services to be provided to the user. The functions are constantly improved and optimized, and the use experience is improved. At the same time, the service provider can directly update the service of the fast application card to further improve the user experience.

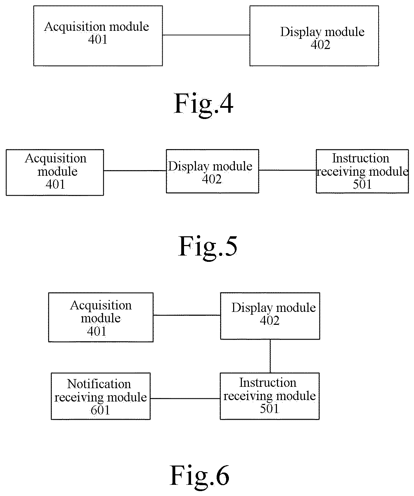

Fig. 4 is a block diagram of a device for displaying service cards according to an exemplary embodiment. Referring to Fig. 4, the device includes an acquisition module 401 and a display module 402.

The acquisition module 401 can be configured to acquire one or more service cards, each of which is used to realize one or more functions.

The display module 402 can be configured to display the one or more service cards or reorganize and then display at least two of the service cards according to presentation requirements.

The service cards include: the service card including different services generated by disassembling different services of the application, or the service card corresponding to the function interface of the application generated after detecting that the user drags the function interface.

The presentation requirements include:
a presentation requirement generated according to to-do items set by the user and/or a current scene; or
a presentation requirement generated according to user information and/or the current scene; the scene includes: a time scene, a location scene, or a time and location scene.

The display module specifically includes: when the presentation requirement includes the service card for a single event, displaying one service card for reminding of one to-do item; or,
when the presentation requirement includes the service cards for a plurality of items, displaying a plurality of the service cards for reminding of a plurality of to-do items; or
when the presentation requirement includes the service cards for at least two related items, displaying the at least two service cards after they are reorganized for reminding of the at least two related to-do items.

The reorganizing at least two of said service cards and then displaying includes: prioritizing the at least two of the service cards and displaying them in a priority order.

Fig. 5 is a block diagram showing a device for displaying service cards according to an exemplary embodiment. Referring to Fig. 5, the device also includes an instruction receiving module 501, which can be set to receive user instructions, add/delete service cards, or adjust the order of the service cards.

Fig. 6 is a block diagram showing a device for displaying service card according to an exemplary embodiment. Referring to Fig. 6, the device also includes a notification receiving module 601, which can be configured to receive a notification of service content update sent by the service party and acquire the service card related to the service content again.

With regard to the device in the above embodiments, the specific manner in which each of the modules performs the operation has been described in detail in the embodiment of the method, and will not be described in detail herein.

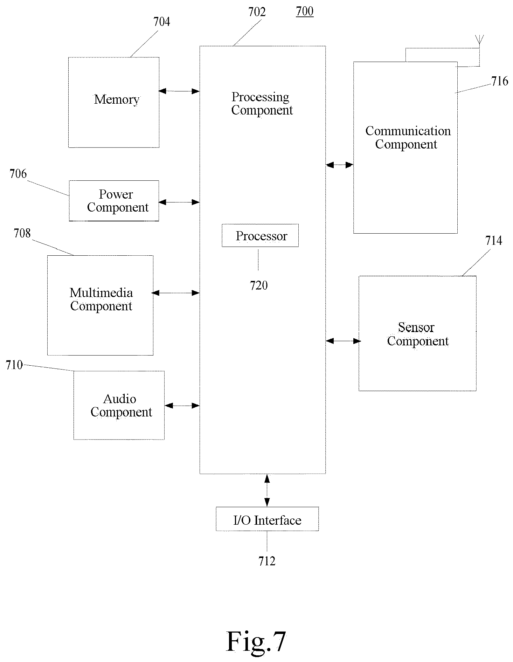

Fig. 7 is a block diagram of a device 700 for displaying service cards, according to an exemplary embodiment. For example, the device 700 may be a mobile phone, a computer, a digital broadcast terminal, a messaging device, a gaming console, a tablet, a medical device, exercise equipment, a personal digital assistant, and the like.

Referring to Fig. 7, the device 700 may include one or more of the following components: a processing component 702, a memory 704, a power component 706, a multimedia component 708, an audio component 710, an input/output (I/O) interface 712, a sensor component 714, and a communication component 716.

The processing component 702 typically controls overall operations of the device 700, such as the operations associated with display, telephone calls, data communications, camera operations, and recording operations. The processing component 702 may include one or more processors 720 to execute instructions to perform all or part of the steps in the above described methods. Moreover, the processing component 702 may include one or more modules which facilitate the interaction between the processing component 702 and other components. For instance, the processing component 702 may include a multimedia module to facilitate the interaction between the multimedia component 708 and the processing component 702.

The memory 704 is configured to store various types of data to support the operation of the device 700. Examples of such data include instructions for any applications or methods operated on the device 700, contact data, phonebook data, messages, pictures, video, etc. The memory 704 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 706 provides power for various components of the device 700. The power component 706 may include a power management system, one or more power sources, and other components associated with the generation, management, and distribution of power for the device 700.

The multimedia component 708 includes a screen providing an output interface between the device 700 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 708 includes a front camera and/or a rear camera. The front camera and the rear camera may receive an external multimedia datum while the device 700 is in an operation mode, such as a photographing mode or a video mode. Each of the front camera and the rear camera may be a fixed optical lens system or have focus and optical zoom capability.

The audio component 710 is configured to output and/or input audio signals. For example, the audio component 710 includes a microphone ("MIC") configured to receive an external audio signal when the device 700 is in an operation mode, such as a call mode, a recording mode, and a voice recognition mode. The received audio signal may be further stored in the memory 704 or transmitted via the communication component 716. In some embodiments, the audio component 710 further includes a speaker to output audio signals.

The I/O interface 712 provides an interface between the processing component 702 and peripheral interface modules, such as a keyboard, a click wheel, buttons, and the like. The buttons may include, but are not limited to, a home button, a volume button, a starting button, and a locking button.

The sensor component 714 includes one or more sensors to provide status assessments of various aspects of the device 700. For instance, the sensor component 714 may detect an open/closed status of the device 700, relative positioning of components, e.g., the display and the keypad, of the device 700, a change in position of the device 700 or a component of the device 700, a presence or absence of user contact with the device 700, an orientation or an acceleration/deceleration of the device 700, and a change in temperature of the device 700. The sensor component 714 may include a proximity sensor configured to detect the presence of nearby objects without any physical contact. The sensor component 714 may also include a light sensor, such as a CMOS or CCD image sensor, for use in imaging applications. In some embodiments, the sensor component 714 may also include an accelerometer sensor, a gyroscope sensor, a magnetic sensor, a pressure sensor, or a temperature sensor.

The communication component 716 is configured to facilitate communication between the device 700 and other devices in a wired or wireless manner. The device 700 can access a wireless network based on a communication standard, such as Wi-Fi, 2G, 3G, 4G, 5G or a combination thereof. In one exemplary embodiment, the communication component 716 receives a broadcast signal or broadcast associated information from an external broadcast management system via a broadcast channel. In one exemplary embodiment, the communication component 716 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 700 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as a memory 704 including instructions executable by the processor 720 in the device 700, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium, when instructions in the storage medium is executed by a processor of a mobile terminal, enables the mobile terminal to perform a method for displaying service cards, the method including:
acquiring one or more service cards, each of which is used to realize one or more functions;
displaying the one or more service cards, or reorganizing and then displaying at least two of said service cards, according to presentation requirements.

Other embodiments of the present disclosure will be apparent to those skilled in the art from consideration of the specification and practice of the present disclosure disclosed here. This application is intended to cover any variations, uses, or adaptations of the present disclosure following the general principles thereof and including common knowledge or conventional technical solution not disclosed in the present disclosure. It is intended that the specification and examples are considered as exemplary only, with a true scope of the present disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the present disclosure is only limited by the appended claims.

## Claims

1. A method for displaying service cards, comprising:
acquiring (S101) one or more service cards, wherein each of the service cards is used to realize one or more functions; and
displaying (S102) the one or more service cards, or reorganizing and then displaying at least two of said service cards, according to presentation requirements.

2. The method of claim 1, wherein the service cards comprise: a service card including different services generated by disassembling different services of an application; or a service card corresponding to a function interface of the application generated after detecting that a user drags the function interface.

3. The method of claim 1 or 2, wherein the presentation requirements comprise:
a presentation requirement generated according to to-do items set by a user and/or a current scene; or
a presentation requirement generated according to user information and/or the current scene, wherein the scene comprises: a time scene, a location scene, or a time and location scene.

4. The method of any of claim 1 to 3, wherein the displaying the one or more service cards, or reorganizing and then displaying at least two of said service cards, according to presentation requirements comprises:
when the presentation requirement comprises the service card for a single event, displaying one service card for reminding of one to-do item; or,
when the presentation requirement comprises the service cards for a plurality of items, displaying a plurality of the service cards for reminding of a plurality of to-do items; or
when the presentation requirement comprises the service cards for at least two related items, reorganizing and then displaying the at least two service cards for reminding of the at least two related to-do items.

5. The method of claim 1 to 4, wherein the reorganizing and then displaying at least two of said service cards comprises: prioritizing the at least two of the service cards and displaying them in a priority order.

6. The method of claim 1 to 5, further comprising:
receiving user instructions, adding/deleting the service cards, or adjusting an order of the service cards.

7. The method of claim 1 to 6, further comprising:
receiving a notification of service content update sent by a service party and acquiring the service card related to the service content again.

8. A device for displaying service cards, comprising:
an acquisition module (401), configured to acquire one or more service cards, wherein each of the service cards is used to realize one or more functions; and
a display module (402), configured to display the one or more service cards, or reorganize and then display at least two of the service cards, according to presentation requirements.

9. The device of claim 8, wherein
the service cards comprise: the service card comprising different services generated by disassembling different services of an application; or the service card corresponding to a function interface of the application generated after detecting that a user drags the function interface.

10. The device of claim 8 or 9, wherein the presentation requirements comprise:
a presentation requirement generated according to to-do items set by a user and/or a current scene; or
a presentation requirement generated according to user information and/or the current scene, wherein the scene comprises: a time scene, a location scene, or a time and location scene.

11. The device of claim 8 to 10, wherein the display module comprises: when the presentation requirement comprises the service card for a single event, displaying one service card for reminding of one to-do item; or,
when the presentation requirement comprises the service cards for a plurality of items, displaying a plurality of the service cards for reminding of a plurality of to-do items; or when the presentation requirement comprises the service cards for at least two related items, reorganizing and then displaying the at least two service cards for reminding of the at least two related to-do items.

12. The device of claim 8 to 11, wherein the reorganizing and then displaying at least two of said service cards comprises: prioritizing the at least two of the service cards and displaying them in a priority order,
preferably, the device further comprises: an instruction receiving module (501), configured to receive user instructions, add/delete service cards, or adjust the order of the service cards.

13. The device of claim 8 to 12, further comprising:
a notification receiving module (601), configured to receive a notification of service content update sent by a service party and acquire the service card related to the service content again.

14. A device for displaying service cards, comprising:
a processor;
a memory for storing instructions executable by the processor;
wherein the processor is configured to:
acquire (S101) one or more service cards, wherein each of the service cards is used to realize one or more functions; and
display (S102) the one or more service cards, or reorganize and then display at least two of the service cards, according to presentation requirements.

15. A non-transitory computer-readable storage medium having stored therein instructions that, when executed by a processor of a mobile terminal, causes the mobile terminal to perform a method for displaying service cards, the method comprising:
acquiring (S101) one or more service cards, wherein each of the service cards is used to realize one or more functions; and
displaying (S102) the one or more service cards, or reorganizing and then displaying at least two of said service cards, according to presentation requirements.
